# EUROPEAN PATENT APPLICATION

(11) **EP 1 367 264 A1**
(43) Date of publication of application: **03.12.2003**
(21) Application number: 03076621.6
(22) Date of filing: 26.05.2003
(51) Int. Cl.: F16B 5/06, B62D 29/04

(54) **Fixture assembly for a constructive detail in a metallic piece**

(30) Priority: 27.05.2002 IT MI20021141
(71) Applicant: Industrialesud S.p.A., 64100 Teramo (IT)
(72) Inventor: Di Sante, Giuseppe, 64026 Roseto Degli Abruzzi (IT); Bessone, Giovanni, 12089 Villanova Mondovi' (IT); D'Ambrosio Patrizio, 64026 Roseto Degli Abruzzi (IT); Taraschi, Alberto, 64100 Teramo (IT)
(74) Representative: De Gregori, Antonella

(57) **Abstract**

A fixture assembly for a constructive detail in a metallic piece, in which a constructive detail comprises a connection area and a metallic piece (14) comprises a positioning area of the constructive detail; in particular the fixture assembly (11) has a body which includes a first portion (12) having clip-release connecting elements (15, 16) to the constructive detail and a second portion (13) having sliding connecting elements (18, 19, 20) with sliding connecting elements (20, 21) situated on the metallic piece (14).

## Description

The present invention relates to a fixture assembly for a constructive detail in a metallic piece.

It is known that in industry in general, constructive details of various shapes and kinds must be fixed to a base, such as a metallic piece of a plate or the like, of a certain structure. In the car industry, for example, it is necessary to position a constructive detail, an accessory or any other element for equipping cars: this operation requires a fixture assembly to make it simple and rapid. Furthermore there must also be an optimization of the construction cost together with an easy and rapid assembly.

For this purpose, any element of this kind must be rapidly and easily positioned in the pre-established positioning area to reduce time and avoid assembly or placement complications.

This derives from the fact that all delays in its positioning must be eliminated to enable the costs to be reduced to the minimum.

These fixture assemblies, moreover, must ensure correct assembly, avoid any possible malfunctioning or faulty placement, in order to increase their functionality.

The contrary causes a slowing down in the assembly and finishing of the constructive detail.

An objective of the present invention is to find a solution to the general technical problem described above.

Another objective is to produce a fixture assembly for a constructive detail in a metallic piece which creates an optimal placement and firm positioning of the constructive detail, of the piece or accessory in general.

Yet another objective is to produce a fixture assembly which is particularly simple and rapid to use, if possible with a limited cost.

These objectives according to the present invention are achieved by producing a fixture assembly for a constructive detail in a metallic piece as illustrated in claim 1 enclosed.

Further important characteristics and details of the present invention are object of the dependent claims.

The characteristics and advantages of a fixture assembly for a constructive detail in a metallic piece according to the present invention will appear more evident from the following illustrative but nonlimiting description of an embodiment with reference to the enclosed figures in which:

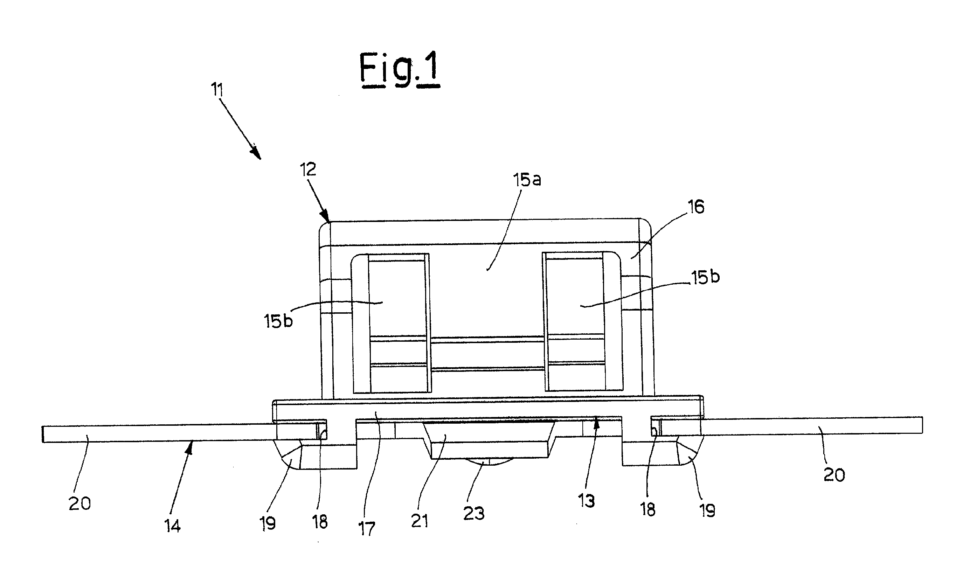

figure 1 is a raised view showing the fixture assembly of an accessory in a metallic piece, such as a plate illustrated aside, according to the present invention in an assembled position,

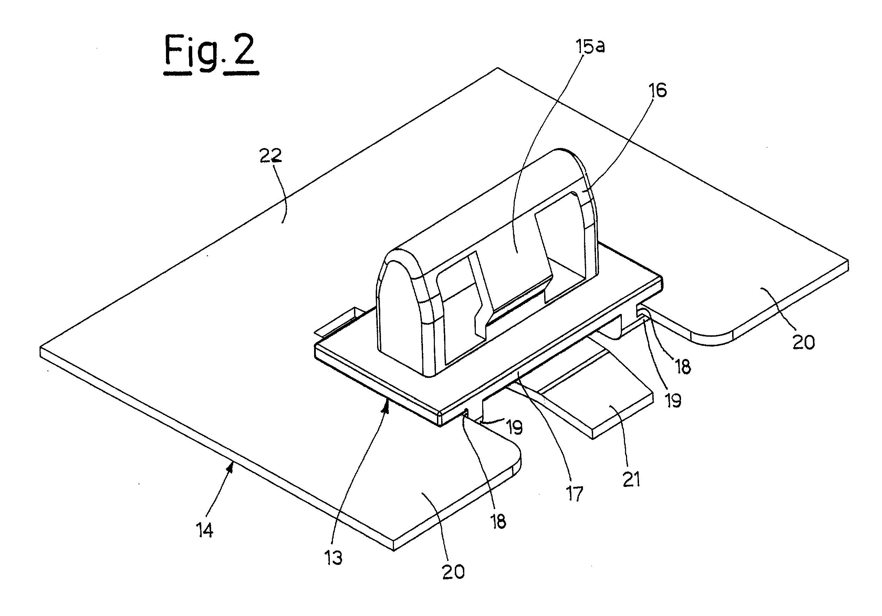

figure 2 is a slanting front perspective view of the fixture assembly illustrated in figure 1,

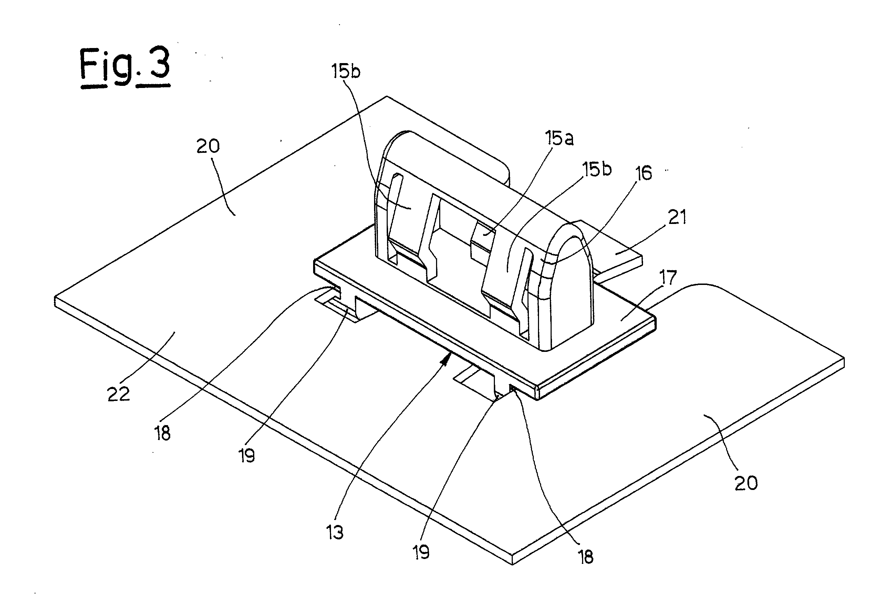

figure 3 is a slanting rear perspective view of what is illustrated in figure 1,
figure 4 is a side view of the fixture assembly on which a constructive detail is positioned, indicated with dashes,
figure 5 is a view from below of what is illustrated in figure 1.

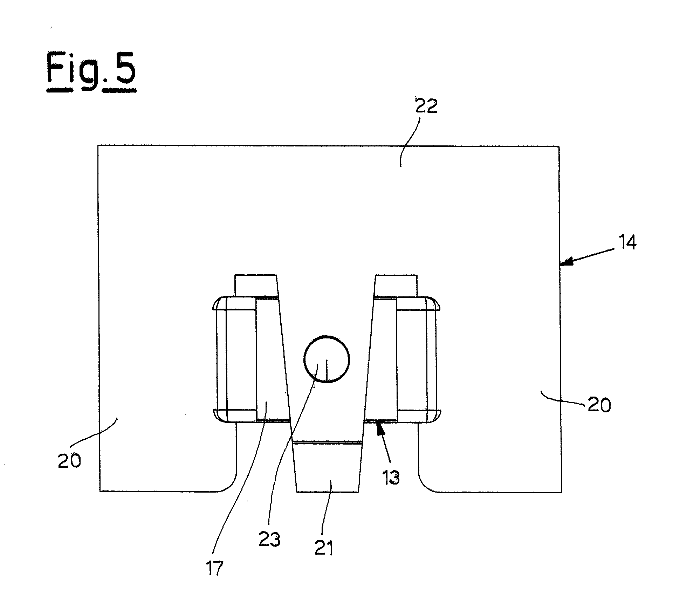

With general reference to the various figures, these schematically show a fixture assembly, indicated as a whole with 11, of a constructive detail 26 of a metallic piece 14, such as a piece of plate base. This fixture assembly is situated on any portion of a metallic piece 14 and allows the firm and rapid attachment of a constructive detail or any accessory 26 (illustrated with dashes in figure 5), such as an additional component or any other element, for example a safety device contemplated in a vehicle.

As is more clearly visible in the various figures, the fixture assembly of the present invention has a body in a single piece comprising a first portion 12 and a second portion 13.

The first portion 12 is equipped with clip release connecting elements to another element (not shown), such as a constructive detail or to an accessory.

The second portion 13, on the other hand, is equipped with sliding elements with sliding elements situated on a metallic piece 14.

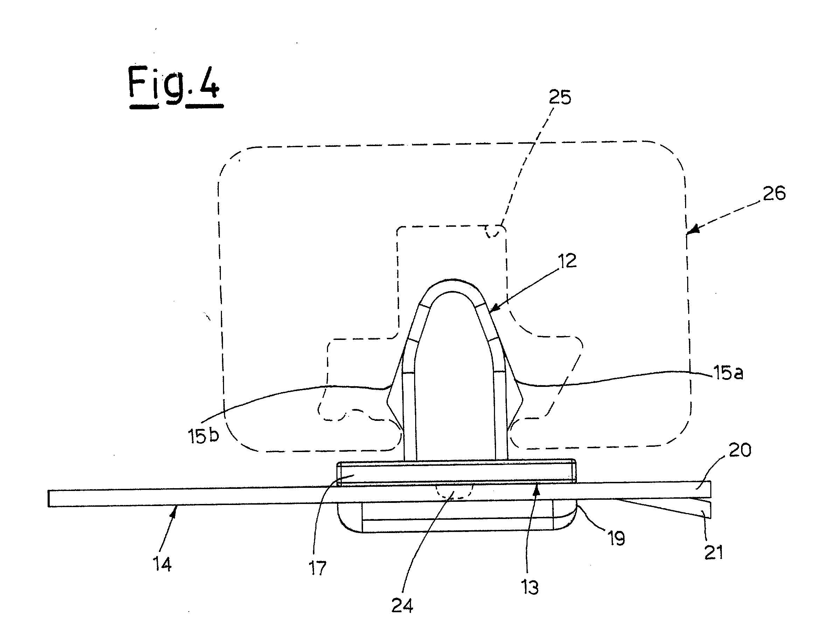

In particular, in the example illustrated, it can be seen that the clip-release connecting elements of the first portion 12 can be situated in folded sheets 15a and 15b centrally positioned in a perimetric supporting structure 16 which forms part of the body. These folded sheets are contemplated in a single element 15a protruding centrally from one side and in two elements 15b protruding sideways from the other side of the supporting structure 16. The sheets 15a and 15b are yielding and suitable for clip-release insertion, together with part of the supporting structure 16, in a seat, schematized in figure 4 in 25 with any form of the above constructive detail (also schematized in 26), thus remaining firmly blocked.

Still in the example illustrated, the body comprises in its second portion 13, a plate portion 17 which extends from the supporting structure 16.

The plate portion 17 is equipped with the above sliding connecting elements identified in the above example by hollow seats 18 obtained by the presence of L-shaped side appendages 19 with free areas parallel to the plate portion 17.

These L-shaped side appendages 19 act as sliding hooking feet with respect to side flaps 20 situated in a pre-selected area of the metallic piece 14.

This area comprises two side flaps 20 and a central flap 21 connected to a common elongated base 22 of the metallic piece 14.

The central flap 21 is flexible, possibly having a folded end which facilitates coupling, it has a drawing 23, obtained by moulding, of the metallic piece 14 which acts as a centering element.

This centering element is suitable for collaborating with a complementary centering element situated on the body of the fixture assembly 11. In particular, the plate portion 17 has a cavity 24 in the centre facing downwards and towards the outside, which is coupled with the drawing 23.

The metallic piece 14 and the second portion 13 therefore have centering and clip-release coupling elements 23, 24.

The drawing and cavity can obviously also be arranged in an upside-down position and on the opposite piece, without altering their functionality.

These elements however are situated in the theoretical positioning area of the reciprocal elements in order to obtain a correct reciprocal position according to the specific demands.

Furthermore, the clip-release connection generated between the two elements also ensures a perfect and accurate coupling.

The body of the fixture assembly 11 consisting of the portions 12 and 13 is generally made of a plastic material by means of an injection moulding process.

The composition of two types of fixture (clip-release and sliding) is a further means of guaranteeing a correct coupling between the parts, which is rapid and firm.

The extreme simplicity of the fixture assembly with respect to the metallic part and any constructive detail, such as an accessory to be assembled in a vehicle, is therefore evident.

It is therefore apparent how a fixture assembly according to the present invention is particularly functional, simple and rapid to assemble.

It also eliminates the observance of reciprocal constraints of parts and elements which are already identified in the pre-assembly phase between parts, thus enabling an intervention to be effected at any moment.

The assembly of this fixture is clearly illustrated herein and is extremely simple.

It can thus be observed how a fixture assembly according to the present invention, due to its simplicity and functionality, allows an accurate reaction between the parts.

In this way, a fixture assembly according to the present invention achieves the objectives specified.

Numerous modifications and variations, all included in the scope of the present invention, can be applied to the fixture assembly of a constructive detail in a metallic piece, thus conceived according to the present invention.

Furthermore, in practice, the materials used, as also the dimensions and components, can vary according to the technical demands.

## Claims

1. A fixture assembly for a constructive detail in a metallic piece, in which a constructive detail (26) comprises a connection area and a metallic piece (14) comprises a positioning area of said constructive detail (26), **characterized in that** said fixture assembly (11) has a body which includes a first portion (12) having clip-release connecting elements (15a, 15b, 16) to said constructive detail (26) and a second portion (13) having sliding connecting elements (18, 19, 20) with sliding connecting elements (20, 21) situated on the metallic piece (14).

2. The fixture assembly according to claim 1, **characterized in that** said first portion (12) comprises a supporting structure (16) and at least one yielding folded sheet (15a, 15b) suitable for being inserted in a respective clip-release seat.

3. The fixture assembly according to claim 1, **characterized in that** said first portion (12) comprises a supporting structure (16) and a yielding folded sheet centrally protruding towards the outside (15a) on one side and, on the other side, a pair of yielding folded sheets protruding towards the outside (15b) suitable for being inserted in a respective clip-release seat (25).

4. The fixture assembly according to claim 1, **characterized in that** said second portion (13) comprises a plate portion (17) connected to a supporting structure (16) of said first portion (12), said sliding connecting elements (18, 19, 20) being associated with said plate portion (17).

5. The fixture assembly according to claim 4, **characterized in that** said sliding connecting elements comprise hollow seats (18) obtained by the presence of L-shaped appendages (19) positioned close to opposite ends of said plate portion (17).

6. The fixture assembly according to claim 5, **characterized in that** free areas of said L-shaped appendages (19) are parallel to said plate portion (17).

7. The fixture assembly according to claim 4, **characterized in that** said metallic piece (14) comprises flaps (20, 21) suitable for being inserted inside said sliding connecting elements (18, 19, 20) of said second portion (13).

8. The fixture assembly according to claim 7, **characterized in that** a central flexible flap (21) is situated below said plate portion (17) of said second portion (13).

9. The fixture assembly according to claim 1, **characterized in that** said metallic piece (14) and said second portion (13) comprise centering and clip-release coupling elements (23, 24).

10. The fixture assembly according to claim 9, **characterized in that** said centering and clip-release coupling elements comprise on one side a drawing (23) and on the other a cavity (24).
